**Europäisches Patentamt**

**European Patent Office**

**Office européen des brevets**

(19)

(11) Veröffentlichungsnummer : **0 141 141 B2**

(12) # NEUE EUROPÄISCHE PATENTSCHRIFT

(45) Veröffentlichungstag der neuen Patentschrift :
**09.12.92 Patentblatt 92/50**

(51) Int. Cl.⁵ : **B21B 13/14,** F16C 13/00

(21) Anmeldenummer : **84110439.1**

(22) Anmeldetag : **03.09.84**

(54) **Durchbiegungseinstellwalze.**

(30) Priorität : **28.09.83 CH 5244/83**

(43) Veröffentlichungstag der Anmeldung :
**15.05.85 Patentblatt 85/20**

(45) Bekanntmachung des Hinweises auf die
Patenterteilung :
**11.03.87 Patentblatt 87/11**

(45) Bekanntmachung des Hinweises auf die
Entscheidung über den Einspruch :
**09.12.92 Patentblatt 92/50**

(84) Benannte Vertragsstaaten :
**AT BE DE FR GB IT LU NL SE**

(56) Entgegenhaltungen :
**DE-A- 2 039 652
DE-B- 1 155 750
DE-B- 1 193 792**

(56) Entgegenhaltungen :
**DE-C- 8 695
DE-U- 1 877 018
US-A- 3 516 135
US-A- 3 638 292
US-A- 3 833 980**

(73) Patentinhaber : **SULZER-ESCHER WYSS AG
Hardstrasse 319
CH-8023 Zürich (CH)**

(72) Erfinder : **Schnyder, Eugen
Rigiblick 521
CH-8913 Ottenbach (CH)**
Erfinder : **Güttinger, Heinz
Langhansergasse 19
CH-8200 Schaffhausen (CH)**

(74) Vertreter : **Paschedag, Hansjoachim et al
c/o Sulzer - Escher Wyss AG Patentabteilung
Postfach
CH-8023 Zürich (CH)**

EP 0 141 141 B2

**Beschreibung**

Die Erfindung betrifft eine Durchbiegungseinstellwalze mit einem um einen nichtrotierenden. Träger rotierbaren und gegenüber dem Träger mit individuell einstellbaren hydraulischen Stützelementen abgestützten Walzenmantel mit einer Aussenoberfläche, wobei im Inneren des Walzenmantels den Stützelementen zugeordnete Laufringe vorgesehen sind, deren Innenflächen Laufbahnen für die zugeordneten Stützelemente bilden.

Durchbiegungseinstellwalzen klassischer Art sind z.B. aus US-A-3 885 283 und US-A-3 802 044 bekannt und dienen zum Walzen bandförmiger Materialien, beispielsweise Metallbändern, wie Aluminiumfolien oder Stahlblechen, von Papierbahnen oder von ähnlichen Materialien.

Wie beispielsweise in US-A-3 921 514 beschrieben, wirkt dabei die Durchbiegungseinstellwalze zusammen mit einer Gegenwalze, wobei die Anpresskraft der beiden Walzen gegeneinander, entlang einer Presslinie, durch den Druck des Druckmittels von hydrastatischen Stützelementen erzeugt wird. Durchbiegungseinstellwalzen zeigen hierbei den Vorteil, dass sich ihre Aussenoberfläche entlang der Presslinie der Form der Gegenwalze anpasst und einer Verformung der Gegenwalze folgt. Ausserdem lässt sich die Anpresskraft entlang der Presslinie durch eine geeignete Einstellung des Druckes des Druckmittels der einzelnen hydrostatischen Stützelemente individuell steuern und regeln, entsprechend einem gewünschten Anpresskraft-Profil entlang der Presslinie, d.h. in Achsenrichtung der Walzen.

Um eine gewünschte Oberflächenqualität des gewalzten Materials, beispielsweise der Aluminiumfolien, Stahlbänder oder Papierbahnen, zu gewährleisten, müssen die Walzen mit einer festen und hinreichend glatten Aussenoberfläche ausgeführt sein. Vorzugsweise werden daher für solche Durchbiegungseinstellwalzen Walzenmäntel aus einem geeigneten Stahl verwendet. Um die gewünschte Wirkung zu erzielen, muss ausserdem der Walzenmantel eine genügende Flexibilität sowohl in Längsrichtung als auch in Umfangsrichtung aufweisen, und das Material und die Wandstärke des Walzenmantels der Durchbiegungseinstellwalze müssen entsprechend gewählt werden. Für eine gute Querflexibilität, d.h. Verbiegbarkeit des Walzenmantels quer zur Presslinie oder Achse, wäre an sich eine kleine Wandstärke vorteilhaft. Infolge der teilweise erheblichen, von den Stützelementen ausgeübten Kräfte wäre dann jedoch die Deformation des Walzenmantels in Umfangsrichtung so gross, dass die Streckgrenze des Materials erreicht werden kann. Die Wandstärke des Walzenmantels darf daher einen bestimmten Wert nicht unterschreiten, um keine unzulässigen Deformationen zu bekommen.

Bei den bekannten Durchbiegungseinstellwalzen, bei denen die Stützelemente direkt auf die Innenseite des Walzenmantels wirken, ist daher keine optimale Flexibilität des Walzenmantels sowohl quer zur Presslinie als auch in Umfangsrichtung möglich, und es muss ein Kompromiss bezüglich der Wandstärke des Walzenmantels geschlossen werden. Da der Walzenmantel also im Interesse der Erhaltung einer hinreichenden Umfangsstabilität nicht beliebig dünn gewählt werden kann, ist die Folge, dass eine Änderung der Anpresskraft am Ort eines Stützelementes wegen der zwangsläufigen Längssteifigkeit des Walzenmantels auf die benachbarten Stützelemente übergreift. Die Einstellbatkeit und Regelbarkeit eines bestimmten gewünschten Anpresskraft-Profils ist also bei den notwendigen dicken Wandstärken für viele Anwendungen nicht fein genug und Linienkraftänderungen können nicht genau genug örtlich gezielt vorgenommen werden. Ausserdem ist für die Verbiegung eines Walzenmantels mit grosser Wandstärke eine erhebliche Kraft und eine dementsprechend vergrösserte Leistung erforderlich.

Aus US-A-4 058 877 sind bereits Durchbiegungseinstellwalzen bekannt, die einen elastischen Walzenmantel aufweisen, auf dessen Innenseite Laufringe vorgesehen sind, die fest mit dem Walzenmantel verbunden sind und mit dem Walzenmantel synchron mitrotieren, und die die Laufbahnen für hydrostatische Stützelemente bilden.

Eine Übertragung dieser Merkmale auf Walzen mit harter Oberfläche, wie sie beispielsweise für das Walzen von Metallfolien erforderlich sind, d.h. das Vorsehen von mit dem Walzenmantel festverbundenen und mitrotierenden Laufringen, würde jedoch die erwähnten Nachteile des Standes der Technik nicht beseitigen, da die Deformation in Umfangsrichtung unverändert bliebe, und damit auch die Gefahr des Erreichens der Streckgrenze und der erhöhte Kraftbedarf.

Die Erfindung setzt sich die Aufgabe, die erwähnten Nachteile des Standes der Technik zu beseitigen und insbesondere eine Durchbiegungseinstellwalze mit harter Aussenoberfläche zu schaffen, die sowohl in Längsrichtung als auch in Umfangsrichtung eine verbesserte Flexibilität aufweist, welche trotzdem eine erhöhte Anpresskraft ohne Auftreten unzulässiger Deformationen gestattet, welche eine verminderte Kraft und Leistung erfordert und welche eine verbesserte individuelle Einstellbarkeit der Linienkraft für die einzelnen Stützelemente und eine verminderte Rückwirkung der von den einzelnen Stützelementen ausgeübten Kraft auf benachbarte Stützelemente aufweist.

Erfindungsgemäss wird diese Aufgabe bei einer gattungsgemässen Durchbiegungseinstellwalze dadurch gelöst, daß der Walzenmantel aus Metall besteht, dass die Laufringe so ausgebildet sind, dass sie einen Aussendurchmesser aufweisen, der etwas kleiner ist als der Innendurchmesser des Walzenmantels, und dass die Laufringe lose und vom Walzenmantel unabhängig rotierbar in das Innere des Walzenmantels eingelegt sind.

Die Unterteilung der Laufbahnen für die Stützelemente in mehrere unabhängig voneinander und vom Walzenmantel rotierbare Laufringe bewirkt dabei eine verbesserte Querflexibilität. Da der Aussendurchmesser der Laufringe etwas geringer ist als der Innendurchmesser des Walzenmantels, rollen die lose eingelegten Laufringe im Inneren des Walzenmantels ab.

Der Hauptteil der Deformation unter Einwirkung der Kraft der Stützelemente wird dabei von den Laufringen aufgenommen, und die Wandstärke des eigentlichen Walzenmantels kann so klein gewählt werden, dass sowohl eine hinreichend gute Querflexibilität als auch Umfangsflexibilität des Walzenmantels erreicht wird.

Anhand der Figuren werden Ausführungsbeispiele der Erfindung erläutert.

Fig. 1 zeigt eine Durchbiegungseinstellwalze im Längsschnitt.

Fig. 2 zeigt die Durchbiegungseinstellwalze von Fig. 1 im Querschnitt.

Figuren 3-8 zeigen Ausschnitte aus dem Walzenmantel und den Laufringen von sechs verschiedenen Ausführungsbeispielen von Durchbiegungseinstellwalzen.

Fig. 9 zeigt den Walzenmantel einer weiteren Ausführungsform einer Durchbiegungseinstellwalze im Schnitt.

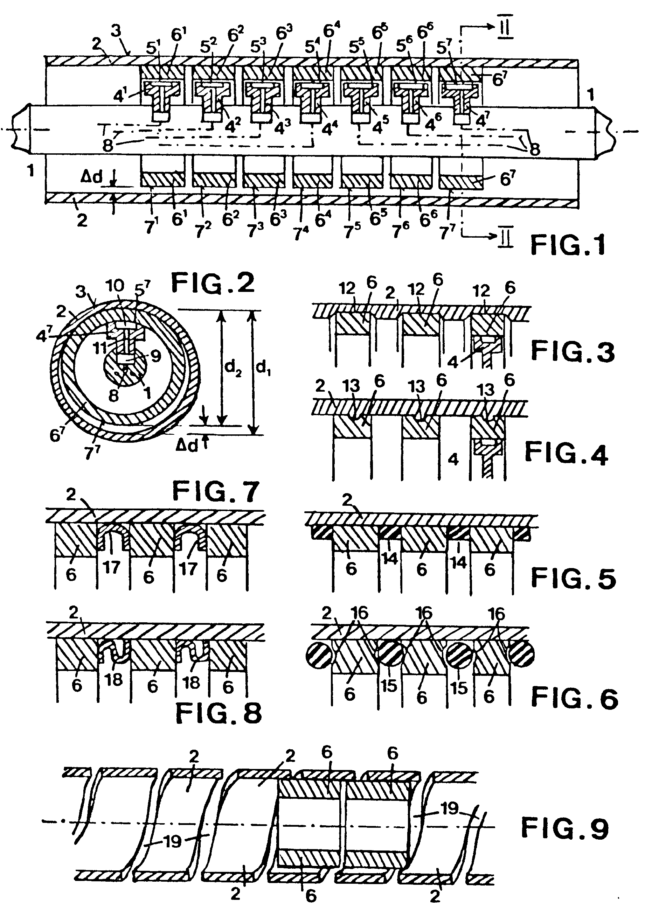

Die in Fig. 1 wiedergegebene Durchbiegungseinstellwalze weist einen nichtrotierenden Träger 1 auf, der in geeigneter Weise in einem bekannten, nicht dargestellten Walzgerüst eingespannt ist, sowie einen um den Träger 1 rotierbaren Walzenmantel 2 mit einer festen und harten Aussenfläche 3. Der Walzenmantel besteht aus einem geeigneten Metall, beispielsweise aus einem legierten und/oder gehärteten Stahl. Der Walzenmantel 2 ist gegenüber dem Träger 1 durch eine Reihe von in Achsenrichtung nebeneinander angeordneten hydrostatischen Stützelementen $4^1 \ldots 4^7$ abgestützt. Diese hydrostatischen Stützelemente können beispielsweise wie die in der eingangs erwähnten US-A-3 802 044 beschriebenen Stützelemente oder in geeigneter anderer bekannter Weise ausgeführt sein.

An ihrer dem Walzenmantel 2 zugekehrten Seite weisen die hydrostatischen Stützelemente $4^1 \ldots 4^7$ Laufflächen $5^1 \ldots 5^7$ auf, die jedoch nicht wie bei bekannten Durchbiegungseinstellwalzen mit der Innenfläche des Walzenmantels 2 direkt zusammenwirken. Im Inneren des Walzenmantels 2 sind Laufringe $6^1 \ldots 6^7$ vorgesehen, wobei jeweils die Innenfläche $7^1 \ldots 7^7$ eines Laufringes $6^1 \ldots 6^7$ die Laufbahn eines zugeordneten Stützelementes $4^1 \ldots 4^7$ bildet. Die Laufringe $6^1 \ldots 6^7$ bestehen ebenfalls aus einem geeigneten Metall, beispielsweise legiertem und/oder gehärtem tem Stahl, und der Aussendurchmesser $d_z$ der Laufringe 6 ist etwas kleiner als der Innendurchmesser $d_1$ des Walzenmantels 2.

Im Betrieb, wenn die hydrostatischen Stützelemente 4 über Druckleitungen 8 mit einem Druckmittel versorgt und in Richtung des rotierenden Walzenmantels gepresst werden, wird der jedem Stützelement 4 zugeordnete Laufring 6 an den Walzenmantel 2 angepresst und rotiert zusammen mit diesem, jedoch mit leicht unterschiedlicher Drehzahl, entsprechend dem Durchmesserunterschied $\Delta d$. Der Laufring 6 rollt also auf der Innenseite des Walzenmantels 2 ab. Infolge des unterschiedlichen Durchmessers von Walzenmantel und Laufring werden bei Ausübung einer Kraft durch die Stützelemente 4 zunächst nur die entsprechenden Laufringe 6 zu einer leicht elliptischen Form defarmiert. Da der Walzenmantel einen grösseren Krümmungsradius als die Laufringe besitzt, erfolgt bis zu einer bestimmten Kraft jedoch keine Deformation des Walzenmantels, so dass die mit einer Deformation des Walzenmantels bei bekannten Durchbiegungseinstellwalzen auftretenden Nachteile von vornherein vermieden werden. Der Durchmesserunterschied $\Delta d$ ist zweckmässigerweise so zu wählen, dass die maximalen Kräfte möglichst allein durch die Laufringe aufgenommen werden.

Während bei bekannten Durchbiegungseinstellwalzen von ca. 2 m Länge und einem Durchmesser von 35-40 cm bisher Wandstärken des Walzenmantels im Grössenordnungsbereich zwischen 50 und 80 mm erforderlich waren, zeigte es sich, dass bei Verwendung von lose in den Walzenmantel eingelegten Laufringen mit ca. 50 mm Wandstärke Durchbiegungseinstellwalzen mit nur 10-15 mm dicken Walzenmänteln hergestellt werden können, die wegen der um einen Faktor 3-4 kleineren Wandstärke eine wesentlich verbesserte Flexibilität sowohl in Längsrichtung als auch in Umfangsrichtung aufweisen, wobei jedoch eine genügende Steifigkeit in Umfangsrichtung durch die Laufringe gewährleistet wird. Wegen des dünneren Walzenmantels ist zudem die Einstellbarkeit der Linienkraft mit grösserer Präzision als bisher möglich, da die Rückwirkung der von einem Stützelement ausgeübten Kraft auf die Umgebung erheblich vermindert ist. Die Anzahl der Stützelemente und damit der Regelpunkte lässt sich also gegenüber vorbekannten Durchbiegungseinstellwalzen vergrössern. Zudern ist die für eine Durchbiegung der Walze entlang der Presslinie oder Achse erforderliche Kraft wegen der geringeren Dicke des Walzenmantels ebenfalls deutlich kleiner als bei vorbekannten Walzen.

Fig. 2 zeigt einen Querschnitt entlang der Ebene II-II der Fig. 1, wobei die gleichen Elemente mit gleichen Bezugsziffern bezeichnet sind. Der Unterschied des Innendurchmessers $d_1$ des Walzenmantels 2 und des Aussendurchmessers $d_2$ der Laufringe $6^7$ ist deut-

lich zu erkennen. In dem dargestellten Beispiel ist das hydrostatische Stützelement $4^7$ in einer zylindrischen Bohrung 9 des Trägers radial beweglich und weist an seiner Lauffläche $5^7$ eine Drucktasche 10 auf, die mit einer Drosselbohrung 11 mit dem Zylinderraum 9 in Verbindung steht, der wiederum an eine Druckleitung 8 angeschlossen ist.

Im Ausführungsbeispiel nach Fig. 1 sind die Laufringe $6^1 \dots 6^7$ und die entsprechenden Stützelemente $4^1 \dots 4^7$ nahezu dicht an dicht gepackt im Inneren des Walzenmantels 2 angeordnet. Die Laufringe $6^1 \dots 6^7$ können dabei beispielsweise durch nicht dargestellte Federvorrichtungen an den Enden der Walze in der richtigen Position gehalten werden. Von Vorteil ist bei dieser einfachen Anordnung, dass sowohl der Walzenmantel 2 als auch die Laufringe $6^1 \dots 6^7$ als rein zylindrische Rohre ausgeführt sein können, welche kostengünstig und leicht auswechselbar sind.

Statt dessen kann die Einhaltung einer bestimmten Position der Laufringe 6 während des Betriebes und während der Rotation des Walzenmantels 2 auch, wie in den Figuren 3-8 gezeigt, auf andere Weise mittels zusätzlicher Massnahmen erreicht werden.

Fig. 3 zeigt einen Walzenmantel 2, welcher auf der Innenseite ringförmige Nuten oder Rillen 12 aufweist, in welchen die Laufringe abrollen und durch welche sie in der vorgesehenen Position gehalten werden.

Fig. 4 zeigt ein abgewandeltes Beispiel, bei welchem auf der Innenseite des Walzenmantels 2 ringförmige Stege 13 vorgesehen sind, welche mit entsprechenden ringförmigen Nuten an der Aussenseite der Laufringe 6 zusammenwirken und durch welche ebenfalls die Position der Laufringe 6 sichergestellt wird.

Statt dessen kann jedoch auch die Position der Laufringe 6 in einem rein zylindrisch ausgebildeten Walzenmantel 2 durch zwischen den Laufringen 6 vorgesehene Distanzringe 14, beispielsweise aus einem gummielastischen Material öder aus einem geeigneten Kunststoff, sichergestellt werden.

In Fig. 6 besitzen die Distanzringe 15 einen kreisförmigen Querschnitt und liegen in seitlichen Nuten 16 der Laufringe 6.

Wie in Fig. 7 gezeigt, können die Distanzringe 17 auch aus einem leicht federnden Metallring 17 bestehen, beispielsweise einem Ring mit U-Profil.

Fig. 8 zeigt ein abgewandeltes Beispiel mit metallischen Distanzringen mit S-Profil, welche eine verbesserte Federung liefern.

Während in den vorangegangenen Beispielen der Walzenmantel 2 als zylindrisches Rohr ausgebildet war, kann insbesondere die Querflexibilität, d.h. die Biegsamkeit entlang der Presslinie, noch weiter verbessert werden, indem der Walzenmantel, wie in Fig. 9 gezeigt, einen schraubenförmigen Spalt 19 aufweist. Der Walzenmantel 2 besteht dabei aus einem schraubenförmig aufgewickelten Band. Die für den Betrieb erforderliche Steifigkeit in Umfangsrichtung wird auch bei diesem Beispiel wieder durch die im Inneren des Walzenmantels 2 vorgesehenen Laufringe 6 gewährleistet. Der schraubenförmige Spalt 19 kann durchgehend über die ganze Länge des Walzenmantels 2 vorgesehen sein oder aus einzelnen Abschnitten bestehen. Bei den meisten Anwendungen stört dabei der Spalt 19 auf der Walzenoberfläche nicht, da dieser im Betrieb laufend über die ganze Länge der Walze wandert.

Es wird bemerkt, dass im Rahmen der Erfindung statt der beschriebenen Walzen mit hydrostatischen Stützelementen mit ähnlichen Vorteilen auch andere Arten von Durchbiegungseinstellwalzen verwendet werden können, zum Beispiel solche mit hydrodynamischen Stützelementen oder auch solche mit Druckkammern als Stützelementen.

**Patentansprüche**

1. Durchbiegungseinstellwalze mit einem um einen nichtrotierenden Träge (1) rotierbaren und gegenüber dem Träger (1) mit individuell einstellbaren hydraulischen Stützelementen ($4^1 \dots 4^7$) abgestützten Walzenmantel (2) mit einer Aussenoberfläche (3), wobei im Inneren des Walzenmantels (2) den Stützelementen ($4^1 \dots 4^7$) zugeordnete Laufringe ($6^1 \dots 6^7$) vorgesehen sind, deren Innenflächen ($7^1 \dots 7^7$) Laufbahnen für die zugeordneten Stützelemente ($4^1 \dots 4^7$) bilden, dadurch gekennzeichnet, dass des Walzenmantel (2) aus Metall besteht, dass die Laufringe ($6^1 \dots 6^7$) einen Aussendurchmesser ($d_2$) aufweisen, der etwas kleiner ist als der Innendurchmesser ($d_1$) des Walzenmantels (2), und dass die Laufringe ($6^1 \dots 6^7$) lose und vom Walzenmantel unabhängig rotierbar in das Innere des Walzenmantels (2) eingelegt sind.

2. Durchbiegungseinstellwalze nach Anspruch 1, dadurch gekennzeichnet, dass die Laufringe ($6^1 \dots 6^7$) eine Wandstärke haben, die grösser als die Wandstärke des Walzenmantels (2) ist.

3. Durchbiegungseinstellwalze nach Anspruch 1 oder 2, dadurch gekennzeichnet, dass die Laufringe ($6^1 \dots 6^7$) im Inneren des Walzenmantels (2) mit geringen Zwischenräumen nahezu dicht an dicht gepackt angeordnet sind.

4. Durchbiegungseinstellwalze nach Anspruch 1 oder 2, dadurch gekennzeichnet, dass die Laufringe (6) mit einem gewissen Abstand voneinander im Inneren des Walzenmantels (2) angeordnet sind.

5. Durchbiegungseinstellwalze nach Anspruch 4, dadurch gekennzeichnet, dass auf der Innenseite des Walzenmantels (2) und/oder auf der Aussenseite der Laufringe (6) ringförmige Führungselemente, insbesondere Nuten oder Stege zum Halten der Laufringe (6) in einer vorgegebenen Position vorgesehen sind.

6. Durchbiegungseinstellwalze nach Anspruch 4, dadurch gekennzeichnet, dass zwischen den Laufringen (6) Distanzelemente (14, 15, 17, 18) vorgesehen sind.

7. Durchbiegungseinstellwalze nach Anspruch 6, dadurch gekennzeichnet, dass die Distanzelemente (14, 15, 17, 18) federnd ausgebildet sind.

8. Durchbiegungseinstellwalze nach Anspruch 7, dadurch gekennzeichnet, dass die Distanzelemente (14, 15) aus einem gummielastischen Material bestehen.

9. Durchbiegungseinstellwalze nach Anspruch 7, dadurch gekennzeichnet, dass die Distanzelemente (17, 18) aus metallischen, zu einem Federprofil gebogenen Elementen bestehen.

10. Durchbiegungseinstellwalze nach einem der Ansprüche 1-9, dadurch gekennzeichnet, dass im Walzenmantel (2) ein schraubenförmiger Spalt (19) vorgesehen ist.

11. Durchbiegungseinstellwalze nach einem der Ansprüche 1-10, dadurch gekennzeichnet, dass die Stützelemente ($4^1$ ... $4^7$) als hydrostatische Stützelemente ausgebildet sind, welche mit Druckmittel versorgte Lagerflächen ($5^1$ ... $5^7$) aufweisen, die mit der Innenfläche ($7^1$... $7^7$) der Laufringe ($6^1$... $6^7$) zusammenwirken.

**Claims**

1. Adjustable bending roll with a roller shell (2) which has an outer surface (3), which is rotatable about a non-rotary carrier (1) and which is supported with respect to the carrier (1) by individually adjustable hydraulic support elements ($4^1$...$4^7$), whereby in the interior of the roller shell (2) races ($6^1$...$6^7$) are provided, which are associated with the support elements ($4^1$...$4^7$), and the internal surfaces ($7^1$...$7^7$) of which form paths for the associated support elements ($4^1$...$4^7$), characterised in that the roller shell (2) consists of metal, that the races ($6^1$...$6^7$) have an external diameter ($d_2$), which is somewhat smaller than the internal diameter ($d_1$) of the roller shell (2), and that the races ($6^1$...$6^7$) are inserted into the interior of the roller shell (2) loosely and so as to be rotatable independently of the roller shell.

2. Adjustable bending roll according to Claim 1, characterised in that the races ($6^1$...$6^7$) have a wall thickness which is greater than the wall thickness of the roller shell (2).

3. Adjustable bending roll according to Claim 1 or 2, characterised in that the races ($6^1$...$6^7$) are arranged packed closely almost one against the other with small intermediate spaces in the interior of the roller shell (2).

4. Adjustable bending roll according to Claim 1 or 2, characterised in that the races (6) are arranged in the interior of the roller shell (2) at a certain distance from each other.

5. Adjustable bending roll according to Claim 4, characterised in that on the inner side of the roller shell (2) and/or on the outer side of the races (6) annular guide elements are provided, in particular grooves or cross-pieces, to hold the races (6) in a predetermined position.

6. Adjustable bending roll according to Claim 4, characterised in that spacing elements (14,15,17,18) are provided between the races (6).

7. Adjustable bending roll according to Claim 6, characterised in that the spacing elements (14,15,17,18) are constructed so as to be resilient.

8. Adjustable bending roll according to Claim 7, characterised in that the spacing elements (14,15) consist of a rubber elastic material.

9. Adjustable bending roll according to Claim 7, characterised in that the spacing elements (17,18) consist of metallic elements which are bent to a spring profile.

10. Adjustable bending roll according to one of Claims 1 - 9, characterised in that a helical slit (19) is provided in the roller shell (2).

11. Adjustable bending roll according to one of Claims 1 - 10, characterised in that the support elements ($4^1$...$4^7$) are constructed as hydrostatic support elements, which have bearing surfaces ($5^1$...$5^7$) which are supplied with pressure medium, and which co-operate with the internal surface ($7^1$...$7^7$) of the races ($6^1$...$6^7$).

## Revendications

1. Cylindre à réglage de flexion, comportant une chemise (2) de cylindre pouvant tourner autour d'un support (1) non rotatif et soutenue par rapport au support (1) par des éléments hydrauliques ($4^1$ à $4^7$) adjustables individuellement, la chemise comportant une surface extérieure (3), cependant qu'à l'intérieur de la chemise (2) de cylindre sont prévues des bagues de roulement ($6^1$ à $6^7$) associées aux éléments de soutien ($4^1$ à $4^7$) et dont les surfaces intérieures ($7^1$ à $7^7$) forment des chemins de roulement pour les éléments de soutien ($4^1$ à $4^7$) correspondants, caractérisé en ce que la chemise (2) de cylindre consiste en métal, que les bagues de roulement ($6^1$ à $6^7$) ont un diamètre extérieur ($d_2$) un peu plus petit que le diamètre intérieur ($d_1$) de la chemise (2) de cylindre et que les bagues de roulement ($6^1$ à $6^7$) sont logées libres et tournant Indépendamment de la chemise de cylindre, à l'intérieur de celle-ci.

2. Cylindre à réglage de flexion suivant la revendication 1, caractérisé en ce que les bagues de roulement ($6^1$ à $6^7$) ont une épaisseur de paroi supérieure à celle de la chemise (2) de cylindre.

3. Cylindre à réglage de flexion suivant la revendication 1 ou 2, caractérisé en ce que les bagues de roulement ($6^1$ à $6^7$) sont logées à l'intérieur de la chemise (2) de cylindre, avec de faibles espaces intermédiaires, pratiquement les unes contre les autres.

4. Cylindre à réglage de flexion suivant la revendication 1 ou 2, caractérisé en ce que les bagues de roulement (6) sont placées à l'intérieur de la chemise (2) de cylindre à une certaine distance les unes des autres.

5. Cylindre à réglage de flexion suivant la revendication 4, caractérisé en ce que, sur la surface intérieure de la chemise (2) de cylindre et/ou sur la surface extérieure des bagues de roulement (6), on prévoit des éléments de guidage annulaires, en particulier des rainures ou nervures, pour le maintien des bagues de roulement (6) dans une position déterminée.

6. Cylindre à réglage de flexion suivant la revendication 4, caractérisé en ce qu'entre les bagues de roulement (6) sont prévus des éléments entretoises (14, 15, 17, 18).

7. Cylindre à réglage de flexion suivant la revendication 6, caractérisé en ce que les éléments entretoises (14, 15, 17, 18) sont élastiques.

8. Cylindre à réglage de flexion suivant la revendication 7, caractérisé en ce que les éléments entretoises (14, 15) sont en une matière élastique.

9. Cylindre à réglage de flexion suivant la revendication 7, carctérlsé en ce que les éléments entretoises (17, 18) sont des éléments métalliques, recourbés selon un profilé élastique.

10. Cylindre à réglage de flexion suivant une des revendications 1 à 9, caractérisé en ce que dans la chemise (2) de cylindre est prévue une fente hélicoïdale (19).

11. Cylindre à réglage de flexion suivant une des revendications 1 à 9, caractérisé en ce que les éléments de soutien ($4^1$ à $4^7$) sont hydrostatiques et comportent des surfaces de roulement ($5^1$ à $5^7$) alimentées en fluide sous pression et coopérant avec la surface intérieure ($7^1$ à $7^7$) des bagues de roulement ($6^1$ à $6^7$).

FIG.1

FIG.2

FIG.3

FIG.4

FIG.7

FIG.5

FIG.8

FIG.6

FIG.9